# EUROPÄISCHE PATENTSCHRIFT

(11) **EP 3 313 771 B1**
(45) Veröffentlichungstag und Bekanntmachung des Hinweises auf die Patenterteilung: **08.12.2021**
(21) Anmeldenummer: 16740944.0
(22) Anmeldetag: 24.06.2016
(51) Int. Cl.: B66C 15/06, B66C 23/90, B66C 23/00

(54) **KRANSTEUERUNG**
CRANE CONTROLLER
COMMANDE DE GRUE

(30) Priorität: 24.06.2015 AT 501252015 U
(43) Veröffentlichungstag der Anmeldung: 02.05.2018
(73) Patentinhaber: Palfinger AG, 5101 Bergheim bei Salzburg (AT)
(72) Erfinder: WIMMER, Eckhard, 5322 Hof bei Salsburg (AT); REITER, Paul, 5101 Bergheim (AT)
(74) Vertreter: Torggler & Hofinger Patentanwälte
(86) Internationale Anmeldenummer: PCT/AT2016/050233
(87) Internationale Veröffentlichungsnummer: WO 2016/205851

(56) Entgegenhaltungen:
- AT-U1- 14 237
- DE-A1- 1 935 791
- DE-A1- 2 910 057
- JP-A- 2002 241 100
- US-A- 4 052 602
- US-A- 5 730 305

## Beschreibung

Die vorliegende Erfindung betrifft einen Kran mit einer Kransteuerung mit den Merkmalen des Oberbegriffs des Anspruchs 1.

Im Stand der Technik ist es allgemein bekannt, hydraulische Ladekräne mit einem Vorsatzknickarm, einem sogenannten "Jib" auszurüsten. Mit einem solchen zusätzlichen Vorsatzarm, der am vordersten Kranschubarm der Kranarmverlängerung des Ladekrans montiert wird, kann die Reichweite bzw. die Hubhöhe eines Ladekrans erhöht werden. Da ein solcher Vorsatzknickarm an der Kranarmverlängerung ein zusätzliches Moment auf den Kran ausübt, muss der Einfahrzustand einer Kranarmverlängerung mit einem Vorsatzknickarm in die Beurteilung der momentanen Kranauslastung mit einbezogen werden. Dabei wird üblicherweise von einer Überlastüberwachung unterschieden, ob sich der vorderste Kranschubarm der Kranarmverlängerung in einem eingefahrenen Zustand befindet oder nicht und davon abhängig zwischen zwei Grenzwerten für einen Betriebsparameter des Krans umgeschaltet. In der Praxis kann dies über einen mit dem vordersten Kranschubarm zusammenwirkenden Schalter mit zwei Schaltpositionen, durch welchen der Kransteuerung Grenzwerte für einen Betriebsparameter des Krans vorgegeben werden können, erfolgen.

Allgemein im Stand der Technik bekannte Kransteuerungen gehen beispielsweise aus den Druckschriften DE 29 10 057 A1, US 5 730 035 A, JP 2002 241100 A,
DE 19 35 791 A1, US 4 052 602 A und AT 14 237 U1 hervor.

Nachteilig bei einer solchen Kransteuerung ist zum Einen der abrupte Übergang von bspw. einem hohen Grenzwert eines zulässigen Betriebsparameters des Krans auf einen verringerten Grenzwert des Betriebsparameters und andererseits eine weniger effiziente Ausnutzung der potentiellen Fähigkeiten des Krans aufgrund der Vorgabe von Grenzwerten in Abhängigkeit des Einfahrzustands der Kranarmverlängerung.

Aufgabe der Erfindung ist die Bereitstellung eines Krans mit Kransteuerung, bei dem die zuvor genannten Nachteile nicht auftreten.

Diese Aufgabe wird durch einen Kran mit den Merkmalen des Anspruchs 1 gelöst. Vorteilhafte Ausführungsformen der Erfindung sind in den abhängigen Ansprüchen definiert.

Dadurch, dass für zumindest eine weitere Schubstellung zwischen den hinterlegten Schubstellungen des zumindest einen Kranschubarms ein betragsmäßig zwischen den hinterlegten Einträgen liegender Grenzwert vorgebbar ist, kann die Vorgabe des Grenzwertes genauer an die aktuelle Schubstellung des Kranschubarmes angepasst erfolgen. Es kann so auch möglich sein, dass zumindest abschnittsweise ein der momentanen Schubstellung proportionaler Grenzwert vorgegeben werden kann. So kann bspw. bei einem teilweise ausgefahrenen vordersten Kranschubarm der Kranarmverlängerung der Kran effizienter genutzt werden, da gegebenenfalls für eine solche Schubstellung ein Grenzwert vorgebbar sein kann, bei dem ein Hebevorgang noch innerhalb der Lastgrenzen durchgeführt werden kann, der bei Berücksichtigung von lediglich dem Einfahrzustand des Kranschubarms bereits eine Überlast darstellen würde.

Bevorzugt ist dabei vorgesehen, dass die Kransteuerung einen Knickwinkelsensor zur Erfassung des zweiten Knickwinkels der Kranarmverlängerung in einer Vertikalen Ebene aufweist, im Speicher für zumindest zwei Knickwinkel der Kranarmverlängerung Einträge für maximal zulässige Grenzwerte hinterlegt sind und die Vorgabe des Grenzwerts durch die Überlastüberwachung abhängig von dem Knickwinkel erfolgt. Dadurch kann zusätzlich zur Schubstellung der Kranarmverlängerung auch die Neigung der Kranarmverlängerung - und somit die effektiv sich für den Vorsatzarm ergebende Auslagerung - in die Vorgabe des Grenzwerts mit einbezogen werden. Somit kann bspw. die Vorgabe für Grenzwerte der Kranauslastung für unterschiedliche Knickwinkelbereiche optimiert werden und so eine effizientere Nutzung eines Krans ermöglicht werden.

Gemäß einem bevorzugten Ausführungsbeispiel kann vorgesehen sein, dass für zumindest einen weiteren Knickwinkel zwischen den hinterlegten Knickwinkeln der Kranarmverlängerung ein betragsmäßig zwischen den hinterlegten Einträgen liegender Grenzwert vorgebbar ist. Dadurch kann erreicht werden, dass die Vorgabe von Grenzwerten für mehrere Knickwinkelbereiche bzw. Knickwinkelstellungen optimiert und so besser an die momentane Krangeometrie angepasst erfolgen kann.

Gemäß einem weiteren bevorzugten Ausführungsbeispiel kann vorgesehen sein, dass der Vorsatzarm zumindest zwei Kranarme aufweist, wobei die zwei Kranarme unterschiedliche Schubstellungen zueinander einnehmen können, und wobei die Kransteuerung einen weiteren Schubstellungssensor zur Erfassung der Schubstellung der Kranarme des Vorsatzarms aufweist, im Speicher für zumindest zwei Schubstellungen der Kranarme des Vorsatzarms, vorzugsweise für eine im Wesentlichen vollständig eingefahrene Schubstellung der Kranarme des Vorsatzarms und eine im Wesentlichen vollständig ausgefahrene Schubstellung der Kranarme des Vorsatzarms, Einträge für maximal zulässige Grenzwerte hinterlegt sind und die Vorgabe des Grenzwerts durch die Überlastüberwachung abhängig von der erfassten Schubstellung des Vorsatzarms erfolgt. Bei einer solchen Anordnung eines weiteren Vorsatzarms an einem an der Kranarmverlängerung angeordneten ersten Vorsatzarm, einer sogenannten "Jib-in-Jib" Konfiguration, kann durch Erfassung und Einbeziehung der Schubstellung des ersten Vorsatzarms die Vorgabe des Grenzwerts durch die Überlastüberwachung besser an die Schubstellung bzw. den Schubstellungsbereich des Vorsatzarms angepasst erfolgen.

Es kann bevorzugt vorgesehen sein, dass für zumindest eine weitere Schubstellung zwischen den hinterlegten Schubstellungen der Kranarme des Vorsatzarms ein betragsmäßig zwischen den hinterlegten Einträgen liegender Grenzwert vorgebbar ist. Dadurch kann die Vorgabe eines Grenzwertes genauer an die aktuelle Schubstellung des Vorsatzarms angepasst erfolgen.

Es kann vorgesehen sein, dass die Kransteuerung einen weiteren Knickwinkelsensor zur Erfassung des dritten Knickwinkels des Vorsatzarms in einer Vertikalen Ebene aufweist, im Speicher für zumindest zwei Knickwinkel des Vorsatzarms Einträge für maximal zulässige Grenzwerte hinterlegt sind und die Vorgabe des Grenzwerts durch die Überlastüberwachung abhängig von dem erfassten Knickwinkel des Vorsatzarms erfolgt. Die Vorgabe eines Grenzwertes kann so bspw. auch in Abhängigkeit des Knickwinkelbereichs bzw. der Knickwinkelstellung des Vorsatzarms erfolgen.

Es hat sich als vorteilhaft herausgestellt, dass für zumindest einen weiteren Knickwinkel des Vorsatzarms zwischen den hinterlegten Knickwinkeln des Vorsatzarms ein betragsmäßig zwischen den hinterlegten Einträgen liegender Grenzwert vorgebbar ist. Die Vorgabe eines Grenzwertes kann so genauer an die momentane Stellung des Vorsatzarms bzw. die Krangeometrie angepasst erfolgen.

Vorteilhaft kann sein, dass an dem Vorsatzarm unter einem vierten Knickwinkel ein weiterer Vorsatzarm, vorzugsweise ein weiterer Knickarm, anordenbar ist. Dadurch kann die Funktionalität, Reichweite und der Einsatzbereich des Krans erweitert werden.

Es kann vorgesehen sein, dass der weitere Vorsatzarm zumindest zwei Kranarme aufweist, wobei die zwei Kranarme unterschiedliche Schubstellungen zueinander einnehmen können, und wobei die Kransteuerung einen weiteren Schubstellungssensor zur Erfassung der Schubstellung der Kranarme des weiteren Vorsatzarms aufweist, und wobei im Speicher für zumindest zwei Schubstellungen der Kranarme des weiteren Vorsatzarms, vorzugsweise für eine im Wesentlichen vollständig eingefahrene Schubstellung der Kranarme des weiteren Vorsatzarms und eine im Wesentlichen vollständig ausgefahrene Schubstellung der Kranarme des weiteren Vorsatzarms, Einträge für maximal zulässige Grenzwerte hinterlegt sind und die Vorgabe des Grenzwerts durch die Überlastüberwachung abhängig von der erfassten Schubstellung der Kranarme des weiteren Vorsatzarms erfolgt. So kann auch bei Bestückung des Krans mit einem zweiten Vorsatzarm ein an dessen Schubstellung angepasster Grenzwert für einen Betriebsparameter vorgegeben werden.

Vorteilhaft kann sein, dass für zumindest eine weitere Schubstellung zwischen den hinterlegten Schubstellungen der Kranarme des Vorsatzarms ein betragsmäßig zwischen den hinterlegten Einträgen liegender Grenzwert vorgebbar ist. So kann, beispielsweise zumindest abschnittsweise, ein der momentanen Schubstellung proportionaler Grenzwert vorgegeben werden.

Vorteilhaft kann sein, dass die Kransteuerung einen weiteren Knickwinkelsensor zur Erfassung des vierten Knickwinkels des weiteren Vorsatzarms in einer Vertikalen Ebene aufweist, im Speicher für zumindest zwei Knickwinkel des weiteren Vorsatzarms Einträge für maximal zulässige Grenzwerte hinterlegt sind und die Vorgabe des Grenzwerts durch die Überlastüberwachung abhängig von dem erfassten Knickwinkel des weiteren Vorsatzarms erfolgt. Dadurch kann unter Einbeziehung der Knickstellung beispielsweise die effektive Auslagerung des weiteren Vorsatzarms in die Vorgabe des Grenzwerts einfließen.

Es kann vorteilhaft sein, dass für zumindest einen weiteren Knickwinkel des weiteren Vorsatzarms zwischen den hinterlegten Knickwinkeln des weiteren Vorsatzarms ein betragsmäßig zwischen den hinterlegten Einträgen liegender Grenzwert vorgebbar ist. Dadurch kann ein an die momentane Knickstellung des Vorsatzarms angepasster Grenzwert vorgegeben werden.

Vorteilhaft kann sein, dass für unterschiedliche Ausführungen von Vorsatzarmen jeweils spezifische Einträge mit Grenzwerten im Speicher hinterlegt sind. Für unterschiedlich dimensionierte oder unterschiedlich ausgestattete Vorsatzarme können jeweils speziell für diese Ausführung geltende Grenzwerte im Speicher hinterlegt sein. Dadurch kann eine optimale, an die jeweilige Kranausstattung angepasste Ausnutzung des Hebepotentials eines Krans durch die Kransteuerung ermöglicht werden.

Als besonders vorteilhaft hat es sich herausgestellt, dass die Schubstellung der Kranarme durch eine Wegmesseinrichtung erfasst wird. Dadurch kann der Kransteuerung für jede Schubstellung der Kranarme ein mit dieser Schubstellung korrespondierender Wert zugeführt werden. Durch eine geeignete Wegmesseinrichtung kann eine beliebig genaue Auflösung der aktuellen Schubstellung erreicht werden. Dies kann dabei die Schubstellung der Kranarmverlängerung und/oder die Schubstellung des Vorsatzarms betreffen.

Bevorzugt ist vorgesehen, dass der Betriebsparameter der Druck im Hydraulikzylinder am Kranarm ist. Da der Druck im Hydraulikzylinder, bspw. im Knickzylinder, direkt mit der am Kran angreifenden Last korrespondiert, ist dieser Betriebsparameter besonders charakteristisch für die momentane Kranauslastung. Es ist dabei möglich, dass der Hydraulikdruck in einem - bspw. dem Hauptzylinder - oder auch mehreren Hydraulikzylindern des Krans erfasst wird und von der Überlastüberwachung ein Grenzwert bzw. Grenzwerte dafür vorgegeben wird bzw. werden.

Es kann bevorzugt vorgesehen sein, dass der Grenzwert für die zumindest eine weitere Schubstellung oder den zumindest einen weiteren Knickwinkel durch Interpolation zwischen den im Speicher hinterlegten Einträgen ermittelbar ist. Dadurch kann ein betragsmäßig zwischen den hinterlegten Einträgen liegender Grenzwert für zumindest eine weitere Schubstellung oder zumindest einen weiteren Knickwinkel, für die bzw. für dessen Bereich kein spezifischer Eintrag im Speicher hinterlegt ist, vorgegeben werden. Es kann daher möglich gemacht werden, für beliebige Schubstellungen bzw. beliebige Knickwinkelstellungen einen an diese sich ergebende Kranstellung angepassten Grenzwert für einen Betriebsparameter vorzugeben. Eine Interpolation kann auch die Ermittlung eines außerhalb des Bereichs der hinterlegten Einträge liegenden Grenzwerts umfassen, da dies das Einbeziehen der hinterlegten Werte als Stützstellen beinhaltet.

Bevorzugt kann vorgesehen sein, dass die Interpolation linear erfolgt. Dadurch lässt sich ein weiterer Grenzwert mit geringem Rechenaufwand ermitteln. Der Verlauf kann dabei zumindest abschnittsweise kontinuierlich und auch monoton fallend sein.

Besonders bevorzugt kann vorgesehen sein, dass die Interpolation polynomial erfolgt. Dadurch lässt sich ein im Wesentlichen beliebiger Verlauf der Vorgabe des Grenzwertes in Abhängigkeit der Schubstellung bzw. des Knickwinkels ermöglichen. Der Verlauf kann dabei zumindest abschnittsweise kontinuierlich und auch monoton fallend sein.

Es kann bevorzugt vorgesehen sein, dass durch die Überlastüberwachung zumindest eine Steuerfunktion der Kransteuerung abhängig vom Verhältnis des erfassten Betriebsparameters zum Grenzwert für den Betriebsparameter einschränkbar ist. Dadurch lässt sich durch die Kransteuerung eine Überlastsituation vermeiden bzw. verhindern. Die Einschränkung einer Steuerfunktion kann dabei das Über- oder Unterschreiten eines Grenzwerts verhindern. Dies kann bspw. eine Beschränkung des höchst zulässigen Drucks in einem Hydraulikzylinder oder auch der maximal zulässigen Änderungsrate eines Betriebsparameters des Krans umfassen.

Schutz wird auch begehrt für einen Kran mit einer Kransteuerung nach einer der beschriebenen Ausführungsformen. Ein solcher Fahrzeugkran, der bspw. als Ladekran bzw. Knickarmkran für ein Fahrzeug ausgebildet sein kann, zeichnet sich durch eine optimierte Ausnutzbarkeit des Hebepotentials bei gleichzeitig hoher Sicherheit vor Überlastsituationen aus.

Weitere Einzelheiten und Vorteile der vorliegenden Erfindung werden anhand der Figurenbeschreibung unter Bezugnahme auf die in den Zeichnungen dargestellten Ausführungsbeispiele im Folgenden näher erläutert. Darin zeigt:
- Fig. 1: eine Seitenansicht eines auf einem Fahrzeug montierten Fahrzeugkrans,
- Fig. 2a und 2b: je eine Seitenansicht einer Ausführung eines Ladekrans,
- Fig. 3: eine Seitenansicht eines Fahrzeugkrans und eine schematische Darstellung einer Kransteuerung mit Kransensorik,
- Fig. 4a bis 4c: eine Seitenansicht verschiedener Ausführungen eines Ladekrans mit jeweils einer schematischen Darstellung einer Kransteuerung mit Kransensorik,
- Fig. 5a bis 5c: eine schematische Darstellung eines Ladekrans mit verschiedenen Schubstellungen der Kranarmverlängerung,
- Fig. 6a und 6b: eine schematische Darstellung eines Ladekrans in verschiedenen Schubstellungen der Kranarmverlängerung mit einer Kransteuerung mit Kransensorik,
- Fig. 7a bis 7c: eine schematische Darstellung eines Ladekrans mit verschiedenen Knickwinkelstellungen der Kranarmverlängerung,
- Fig. 8a und 8b: eine schematische Darstellung eines Ladekrans in verschiedenen Knickwinkelstellungen der Kranarmverlängerung mit einer Kransteuerung mit Kransensorik und
- Fig. 9a und 9b: jeweils eine weitere schematische Darstellung eines Ladekrans mit einer Kransteuerung mit Kransensorik.

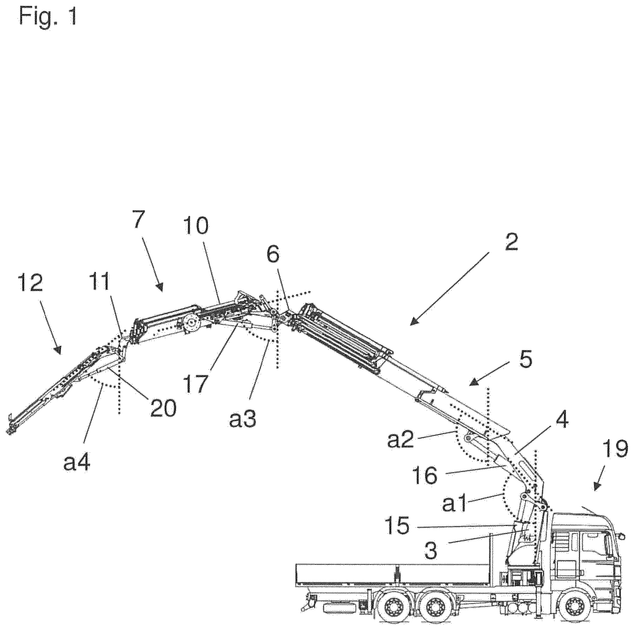

Figur 1 zeigt ein Fahrzeug 19 mit einem darauf montierten Kran 2, wobei der Kran 2 einen ersten, häufig als Kransäule bezeichneten und beispielsweise um eine vertikale Achse drehbaren Kranarm 3, einen unter einem ersten Knickwinkel a1 an diesem angeordneten zweiten, häufig als Hubarm bezeichneten Kranarm 4, eine an diesem unter einem zweiten Knickwinkel a2 angeordnete Kranarmverlängerung 5 mit mehreren Schubarmen, einen an dem vordersten Kranschubarm 6 der Kranarmverlängerung 5 angeordneten Vorsatzarm 7 mit einem inneren Kranarm 10 und einem äußeren Kranarm 11 und einen an diesem unter einem vierten Knickwinkel a4 angeordneten zweiten Vorsatzarm 12 aufweist. Zum Verschwenken des zweiten Kranarms 4 gegenüber dem ersten Kranarm 3 in einer vertikalen Ebene ist ein Hydraulikzylinder 15 vorgesehen. Zum Verschwenken der Kranarmverlängerung 5 gegenüber dem zweiten Kranarm 4 in einer vertikalen Ebene ist der Hydraulikzylinder 16 vorgesehen. Um weiter ein Verschwenken des ersten Vorsatzarms 7 gegenüber der Kranarmverlängerung 5 in einer vertikalen Ebene zu ermöglichen, ist ein Hydraulikzylinder 17 vorgesehen. Analog dazu ist letztlich eine Hydraulikzylinder 21 zum Verschwenken des zweiten Vorsatzarms 12 in einer vertikalen Ebene gegenüber dem ersten Vorsatzarm 7 vorgesehen.

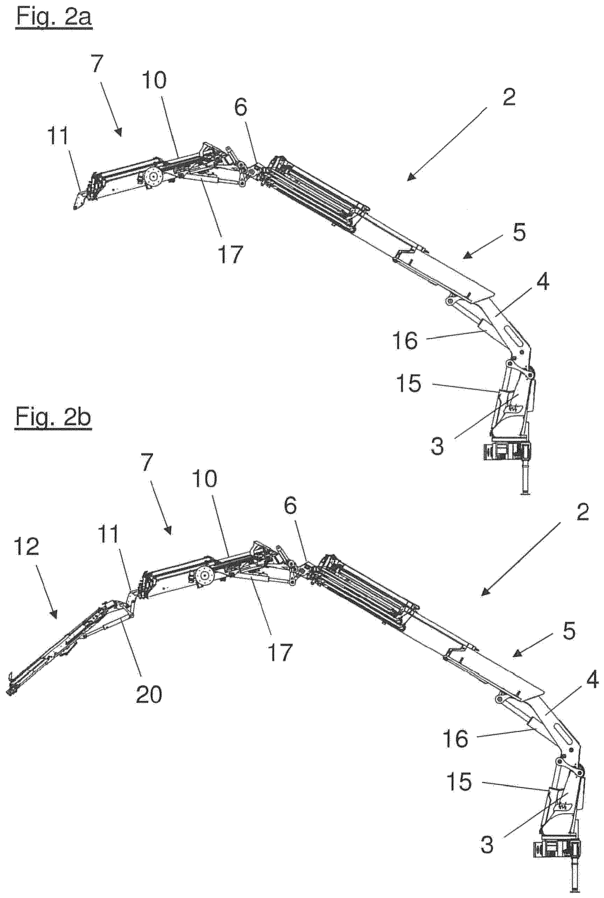

Figur 2a zeigt eine Detailansicht einer Ausführung eines Krans 2 mit einem Vorsatzarm 7.

Figur 2b zeigt eine Detailansicht eines Krans 2 mit einem ersten Vorsatzarm 7 und einem zweiten Vorsatzarm 12.

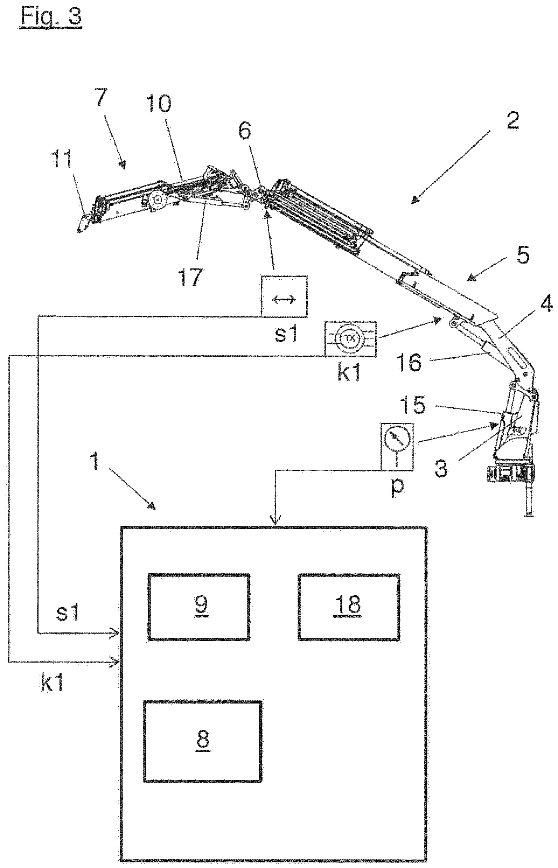

In Figur 3 ist eine Ausführung eines Krans 2 mit einem Vorsatzarm 7 und einer Kransteuerung 1 mit zugehöriger Kransensorik gezeigt. Die Kransteuerung 1 weist dabei einen Schubstellungssensor s1 zur Erfassung der Schubstellung des vordersten Kranschubarms 6 der Kranarmverlängerung 5, einen Knickwinkelsensor k1 zur Erfassung der Knickwinkelstellung der Kranarmverlängerung 5 in einer vertikalen Ebene, sowie in dieser Ausführung auch einen Drucksensor p zur Erfassung des Hydraulikdrucks im Hydraulikzylinder 15 des Krans 2 auf. Die von der Sensorik erfassten Werte werden der Kransteuerung 1 über entsprechende Verbindungen, sei es eine kabelgebundene Messleitung oder eine drahtlose Verbindung, zugeführt. Die Kransteuerung 1 weist weiter einen Speicher 8 zum Ablegen von Grenzwerten für zumindest einen für die momentane Kranauslastung charakteristischen Betriebsparameter des Krans 2, eine Überlastüberwachung 9 durch welche der Kransteuerung 1 ein Grenzwert für zumindest einen Betriebsparameter des Krans 2 vorgebbar ist und eine Recheneinheit 18 auf. Die Überlastüberwachung 9 der Kransteuerung 1 kann durch Vorgabe eines Grenzwerts eine oder mehrere Funktionen des Krans 2 derart einschränken, dass das über- oder auch unterschreiten eines Betriebsparameters des Krans - beispielsweise der Hydraulikdruck in einem der Hydraulikzylinder 15, 16, 17, 21, die Schubstellung oder auch die Knickwinkelstellung - verhindert werden kann. Die Vorgabe eines Grenzwerts kann dabei in Abhängigkeit der durch den Schubstellungssensor s1 erfassten Schubstellung der Kranarmverlängerung 5 und/oder der vom Knickwinkelsensor k1 erfassten Knickwinkelstellung der Kranarmverlängerung 5 erfolgen, sowie auch in Abhängigkeit der durch den Schubstellungssensor s2 erfassten Schubstellung des Vorsatzarms 7 und/oder der vom Knickwinkelsensor k2 erfassten Knickwinkelstellung des Vorsatzarms 7.

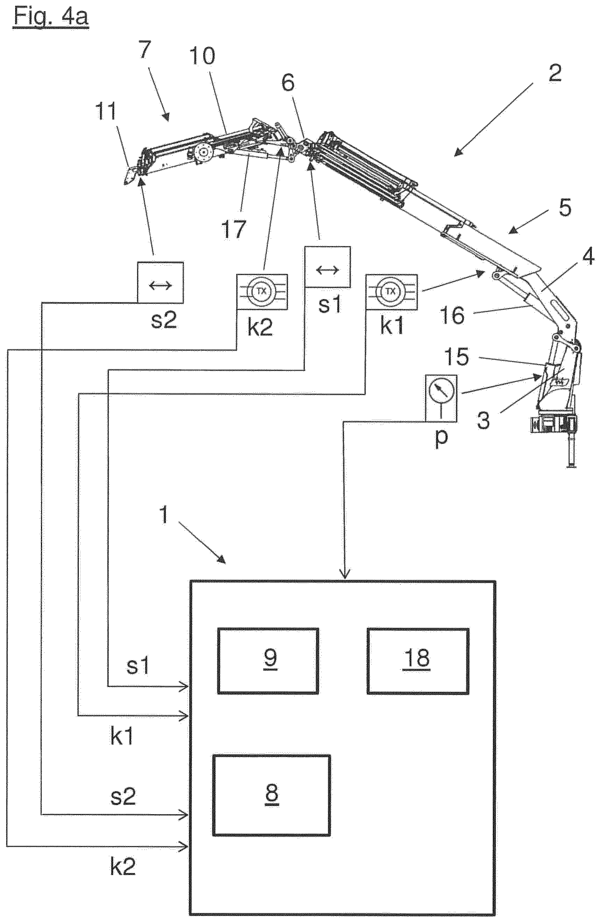

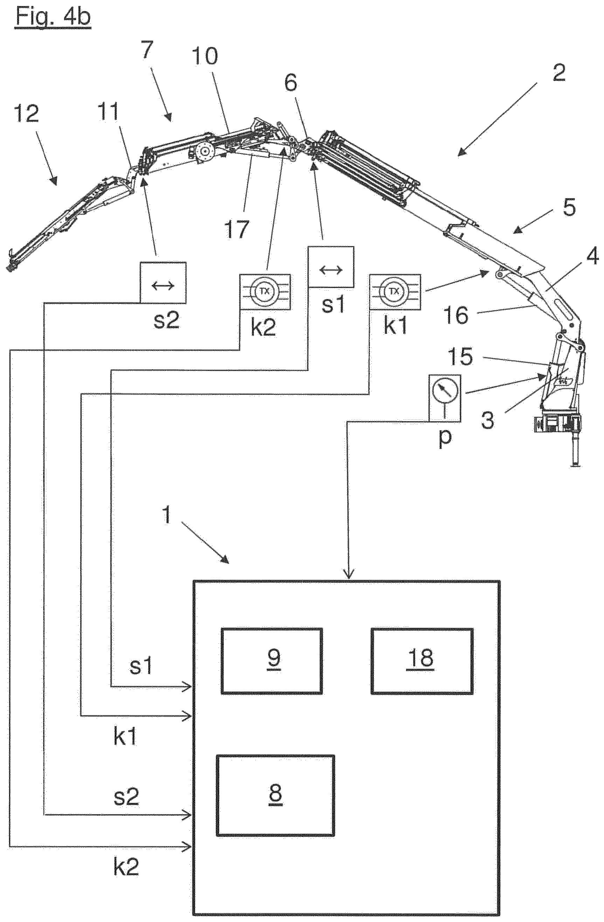

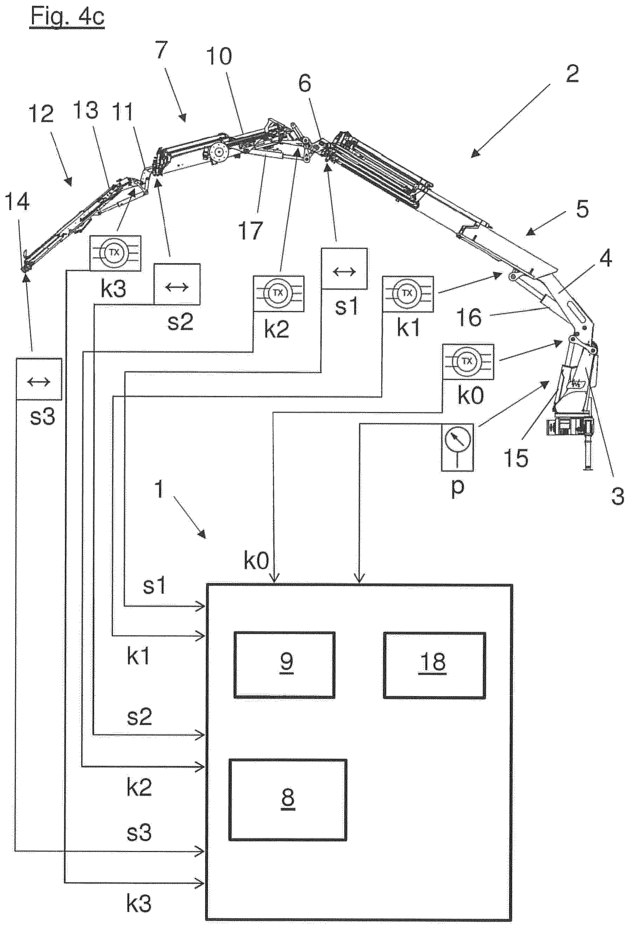

Figur 4a zeigt eine Ausführung eines Krans 2 mit einem ersten Vorsatzarm 7 und eine schematische Darstellung einer Kransteuerung 1 mit zugehöriger Kransensorik. Die Kransensorik umfasst dabei wie im zuvor in Figur 3 gezeigten Ausführungsbeispiel zunächst einen Schubstellungssensor s1 zur Erfassung der Schubstellung der Kranarmverlängerungen 5 und einen Knickwinkelsensor k1 zur Erfassung der Knickwinkelstellung der Kranarmverlängerung 5 in einer vertikalen Ebene. Weiter umfasst die Kransensorik in der in Figur 4 gezeigten Ausführung des Krans 2 einen zweiten Schubstellungssensor s2 zur Erfassung der Schubstellung des äußersten Kranarms 11 des ersten Vorsatzarms 7 und einen zweiten Knickwinkelsensor k2 zur Erfassung der Knickwinkelstellung des ersten Vorsatzarms 7 in einer vertikalen Ebene. In der gezeigten Ausführung umfasst die Kransensorik zudem einen Drucksensor p zur Erfassung des Hydraulikdrucks im Hauptzylinder 15. Die von der Kransensorik erfassten Sensordaten werden der Kransteuerung 1 über geeignete Verbindungen zugeführt. Dort können die Sensordaten mit im Speicher 8 abgelegten Einträgen für Grenzwerte für die momentane Kranauslastung charakteristische, mit den Sensordaten korrespondierende Betriebsparameter des Krans 2 durch eine Recheneinheit 18 verglichen werden und gegebenenfalls von der Überlastüberwachung 9 entsprechende Grenzwerte für Betriebsparameter in Abhängigkeit der erfassten Sensordaten, also beispielweise in Abhängigkeit der von den Knickwinkelsensoren k1, k2 erfassten Knickwinkeln a2, a3 der Kranarmverlängerung 5 und des Vorsatzarms 7 sowie der jeweiligen Schubstellung des Schubarms 6 und der Kranarme 10, 11 des Vorsatzarms 7, vorgegeben werden.

Figur 4b zeigt einen Kran 2 mit einem daran angeordneten Vorsatzarm 7 und einem weiteren Vorsatzarm 12.

Figur 4c zeigt eine Ausführung eines Krans 2 mit einem ersten Vorsatzarm 7, einem daran angeordneten weiteren Vorsatzarm 12 und eine schematische Darstellung einer Kransteuerung 1 mit zugehöriger Kransensorik. Der weitere Vorsatzarm 12 weist zwei Kranarme 13, 14 auf, die unterschiedliche Schubstellungen zueinander einnehmen können. Die Kransensorik umfasst dabei wie im zuvor in Figur 4a gezeigten Ausführungsbeispiel einen Schubstellungssensor s1 und einen Schubstellungssensor s2 zur Erfassung der Schubstellung der Kranarmverlängerungen 5 und zur Erfassung der Schubstellung der Kranarme 10, 11 des Vorsatzarms. Weiter umfasst die Kransensorik einen Knickwinkelsensor k1 und einen Knickwinkelsensor k2 zur Erfassung der Knickwinkelstellung der Kranarmverlängerung 5 in einer vertikalen Ebene und zur Erfassung der Knickwinkelstellung des Vorsatzarms 7 in einer vertikalen Ebene. Weiter umfasst die Kransensorik in der in Figur 4c gezeigten Ausführung des Krans 2 einen dritten Schubstellungssensor s3 zur Erfassung der Schubstellung der Kranarme 13, 14 des weiteren Vorsatzarms 12 und einen dritten Knickwinkelsensor k3 zur Erfassung der Knickwinkelstellung des weiteren Vorsatzarms 12 in einer vertikalen Ebene. Darüber hinaus umfasst die in der Figur 4c gezeigte Ausführung des Krans 2 einen Knickwinkelsensor k0 zur Erfassung des ersten Knickwinkels a1, den der zweite Kranarm 4 zur Vertikalen einschließt. In der gezeigten Ausführung umfasst die Kransensorik zudem wieder einen Drucksensor p zur Erfassung des Hydraulikdrucks im Hauptzylinder 15. Die von der Kransensorik erfassten Sensordaten werden der Kransteuerung 1 über geeignete Verbindungen zugeführt. Dort können die Sensordaten mit im Speicher 8 abgelegten Einträgen für Grenzwerte für die momentane Kranauslastung charakteristische, mit den Sensordaten korrespondierende Betriebsparameter des Krans 2 durch eine Recheneinheit 18 verglichen werden und gegebenenfalls von der Überlastüberwachung 9 entsprechende Grenzwerte für Betriebsparameter in Abhängigkeit der erfassten Sensordaten vorgegeben werden. Im gezeigten Ausführungsbeispiel kann die Vorgabe des Grenzwerts also beispielweise in Abhängigkeit der von den Knickwinkelsensoren k1, k2, k3 erfassten Knickwinkeln a2, a3, a4 der Kranarmverlängerung 5, des Vorsatzarms 7 und des weiteren Vorsatzarms 12 sowie der jeweiligen Schubstellung des Schubarms 6, der Kranarme 10, 11 des Vorsatzarms 7 und der Kranarme 13, 14 des weiteren Vorsatzarms 12 erfolgen. Die Vorgabe eines Grenzwerts für zumindest einen Betriebsparameter des Krans 2 kann zudem in Abhängigkeit des vom Knickwinkelsensor k0 erfassten ersten Knickwinkels a1 erfolgen.

Anders als dargestellt kann der zweite Kranarm 4 auch teleskopisch ausgebildet sein. Ein solcher teleskopisch ausgeführter zweiter Kranarm 4 kann dann die Funktion der Kranarmverlängerung 5 übernehmen und es kann gegebenenfalls daran auch ein Vorsatzarm 7 angeordnet sein. Alternativ dazu ist auch denkbar, dass die Kranarmverlängerung 5 direkt am ersten Kranarm 3 angeordnet ist. Es ist dabei ohne weiters möglich, die Kransensorik und die Kransteuerung 1 an solche Gegebenheiten anzupassen.

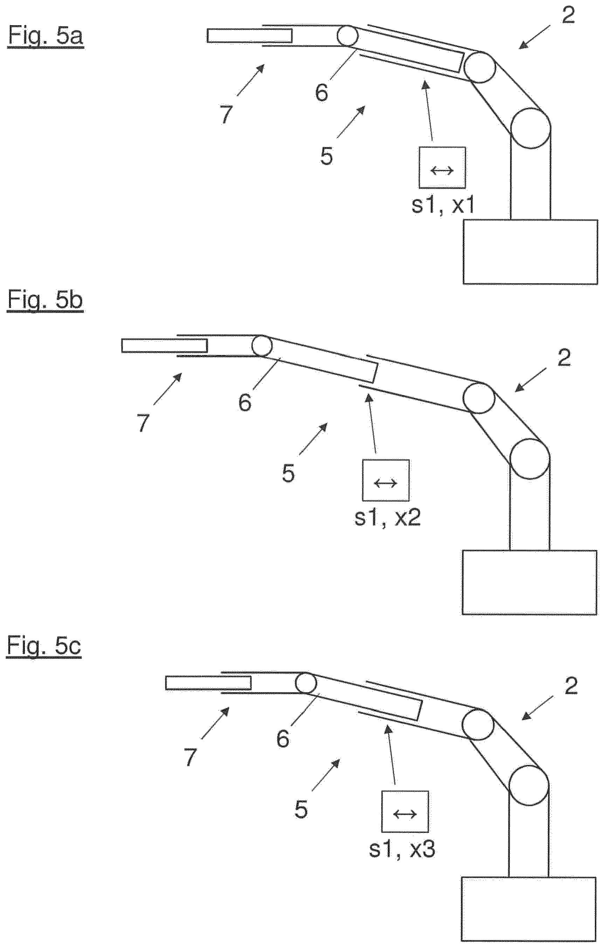

Figur 5a bis 5c zeigt jeweils eine schematische Darstellung eines Krans mit einer Kranarmverlängerung 5 mit einem Kranschubarm 6 und einem daran befestigten Vorsatzarm 7 mit verschiedenen Schubstellungen x1, x2, x3 des Kranschubarms 6. In Figur 5a ist dabei eine im Wesentlichen vollständig eingefahrene Schubstellung x1 des Kranschubarms 6 der Kranarmverlängerung 5 gezeigt. Figur 5b hingegen zeigt eine im Wesentlichen vollständig ausgefahrene Schubstellung x2 des Kranschubarms 6 der Kranarmverlängerung 5. Figur 5c zeigt eine Schubstellung x3 des Kranschubarms 6 der Kranarmverlängerung 5, die sich zwischen einer im Wesentlichen vollständig eingefahrenen und vollständig ausgefahrenen Schubstellung befindet. Die Schubstellung des Kranschubarms 6 der Kranarmverlängerung 5 wird dabei jeweils vom Schubstellungssensor x1 erfasst.

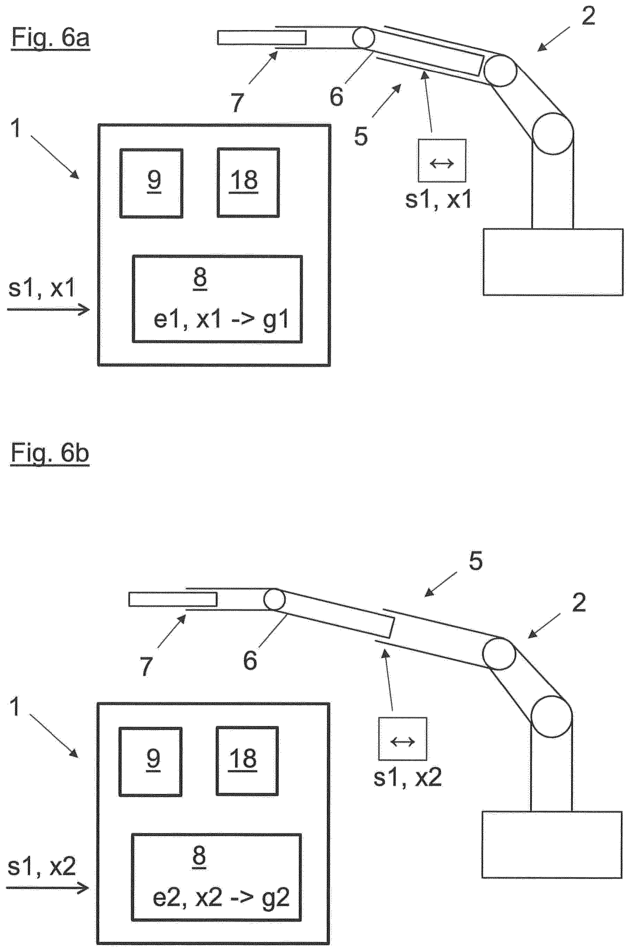

In Figur 6a ist eine schematische Darstellung eines Krans 2 mit einer Kranarmverlängerung 5 und einem Vorsatzarm 7 gezeigt. Der Kranschubarm 6 der Kranarmverlängerung 5 ist dabei in einer im Wesentlichen vollständig eingefahrenen Schubstellung x1, welche vom Schubstellungssensor s1 erfasst wird, gezeigt. Der schematisch gezeigten Kransteuerung 1 wird vom Schubstellungssensor s1 der zugehörige Messwert zur Schubstellung x1 zugeführt. Im Speicher 8 der Kransteuerung 1 ist für diese Schubstellung x1 ein zugehöriger Eintrag e1 mit dem zugewiesenen Grenzwert g1 hinterlegt. Dieser Grenzwert g1, der beispielsweise einen Grenzdruck für einen hier nicht gezeigten Hydraulikzylinder darstellen kann, kann von der Überlastüberwachung 9 als Grenzwert für einen Betriebsparameter des Krans 2 vorgegeben werden. Analog dazu ist in Figur 6b ein Kran 2 mit einer Kranarmverlängerung 5 und einem Vorsatzarm 7 gezeigt, wobei sich der Kranschubarm 6 der Kranarmverlängerung 5 in einer im Wesentlichen vollständig ausgefahrenen Schubstellung x2 befindet, gezeigt. Der vom Schubstellungssensor s1 erfasste Messwert zur Schubstellung x2 wird der Kransteuerung 1 zugeführt. Zu dieser Schubstellung x2 ist im Speicher 8 ein Eintrag e2 hinterlegt, dem ein Grenzwert e2 zugewiesen ist.

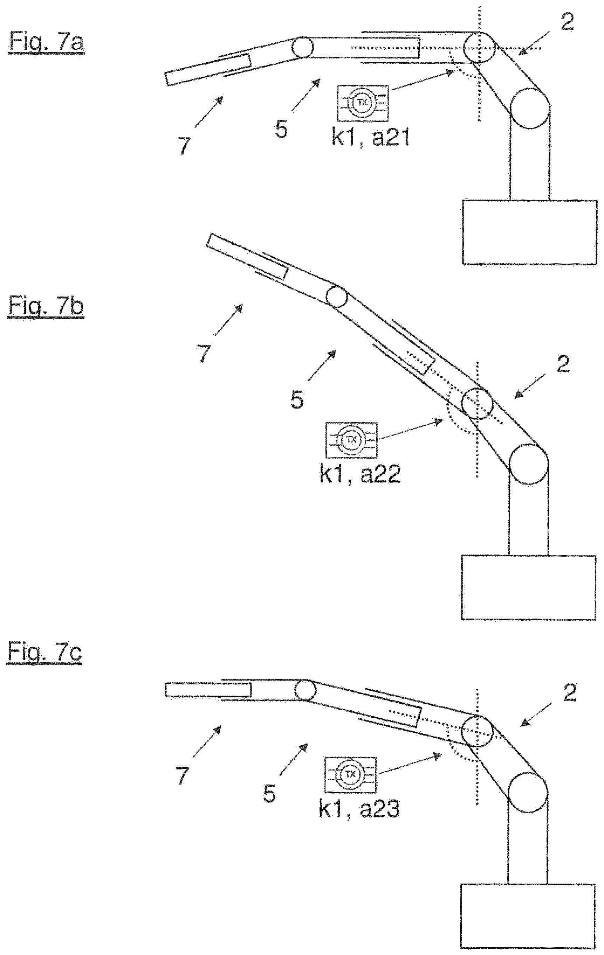

In Figur 7a bis 7c ist jeweils eine schematische Darstellung eines Krans 2 mit einer Kranarmverlängerung 5 und einem Vorsatzarm 7 gezeigt, wobei sich die Darstellungen durch unterschiedliche Knickwinkel a21, a22, a23 der Kranarmverlängerung 5 in einer vertikalen Ebene unterscheiden. In Figur 7a ist beispielsweise eine Stellung des Krans 2 gezeigt, in welcher die Kranarmverlängerung 5 in einer im Wesentlichen horizontalen Stellung gezeigt ist. Der zugehörige Knickwinkel a21 wird dabei vom Knickwinkelsensor k1 erfasst. Figur 7b zeigt eine Stellung des Krans, in welcher die Kranarmverlängerung über die Horizontale hinaus angestellt ist. Der zugehörige Knickwinkel a22 wird vom Knickwinkelsensor k1 erfasst. In Figur 7c ist der Kran in einer Stellung gezeigt, bei der die Kranarmverlängerung 5 unter einem Knickwinkel a23 angeordnet ist, der zwischen den zuvor in den Figuren 7a und 7b gezeigten Knickwinkelstellungen ist.

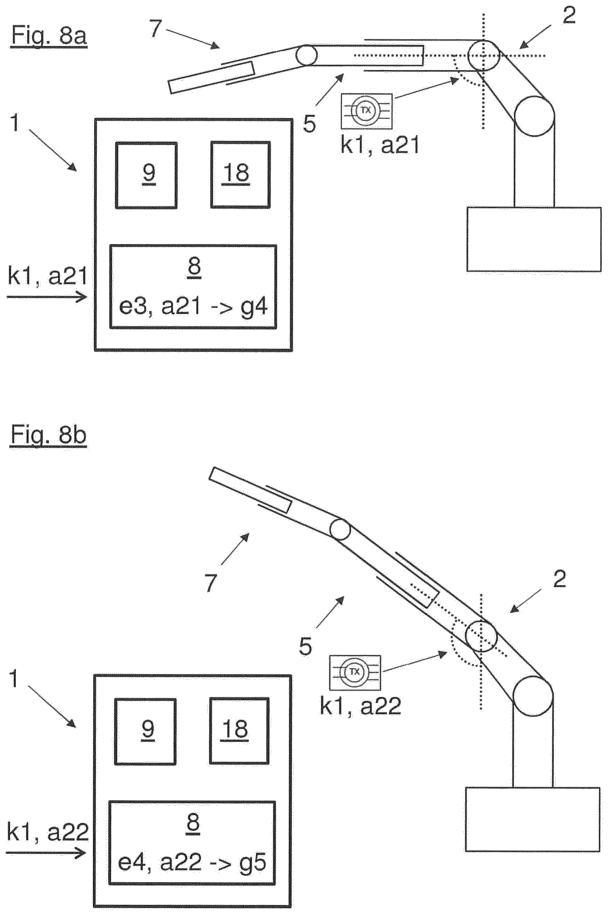

Figur 8a zeigt eine schematische Darstellung eines Krans 2 mit einer Kranarmverlängerung 5 und einem daran angeordneten Vorsatzarm 7. Die Kranarmverlängerung 5 ist dabei unter einem vom Knickwinkelsensor k1 erfassten Knickwinkel a21, der in der gezeigten Ausführung im Wesentlichen einer horizontal gelegenen Kranarmverlängerung 5 entspricht, angeordnet. Der vom Knickwinkelsensor k1 erfasste Messwert zum Knickwinkel a21 wird der Kransteuerung 1 zugeführt, wobei im Speicher 8 der Kransteuerung 1 ein zum Knickwinkel a21 zugehöriger Eintrag e3, dem der Grenzwert g4 zugewiesen ist, hinterlegt ist. Dieser Grenzwert g4 kann durch die Überlastüberwachung 9 der Kransteuerung 1 als Grenzwert für einen Betriebsparameter des Krans 2 vorgegeben werden.

Analog zu Figur 8a ist in Figur 8b ein Kran 2 in einer weiteren Knickwinkelstellung a22 der Kranarmverlängerung 5 gezeigt. Der von dem Knickwinkelsensor k1 erfasste Messwert zum Knickwinkel a22 wird der Kransteuerung 1 zugeführt, wobei in deren Speicher 8 zu diesem Knickwinkel a22 ein Eintrag e4 hinterlegt ist, dem der Grenzwert g5 zugewiesen ist.

Exemplarisch soll nun die Vorgabe eines weiteren Grenzwerts für jeweils eine zwischen mit Einträgen im Speicher 8 korrespondierende Schubstellung und eine zwischen mit Einträgen im Speicher 8 korrespondierende Knickwinkelstellung anhand der Kranarmverlängerung 5 erläutert werden. Es versteht sich von selbst, dass sich die Ausführungen auch auf andere Kranarme bzw. Kranschubarme oder Vorsatzarme des Krans 2 anwenden lassen

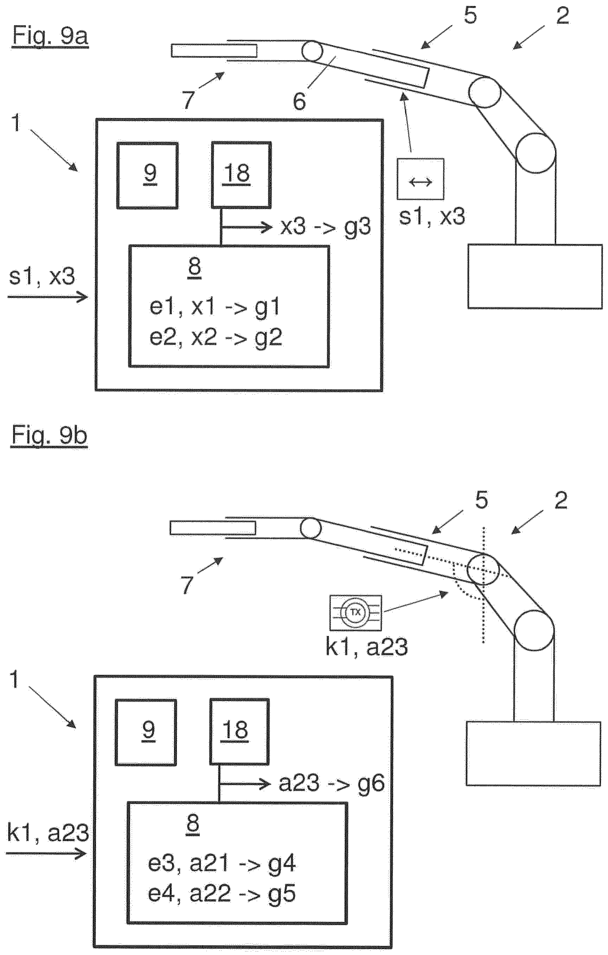

In Figur 9a und 9b ist jeweils eine Kranstellung eines schematisch dargestellten Krans 2 gezeigt, deren zugehörigen Schubstellung bzw. Knickstellung zwischen zugehörigen, im Speicher 8 der Kransteuerung 1 hinterlegten Werten liegen, gezeigt. Konkret ist in Figur 9a ein Kran 2 mit einer Kranarmverlängerung 5 und einem Vorsatzarm 7 gezeigt, wobei sich der Kranschubarm 6 der Kranarmverlängerung 5 in einer mit einer teilweise aus- bzw. eingefahrenen Stellung korrespondierenden Schubstellung x3 befindet. Der vom Schubstellungssensor s1 erfasste Wert zur Schubstellung x3 wird der Kransteuerung 1 zugeführt. In der Kransteuerung 1 sind im Speicher 8 für zwei Schubstellungen x1 und x2 Einträge e1, e2 mit zugehörigen Grenzwerten g1, g2 hinterlegt. Die Schubstellung x3 kann sich beispielsweise betragsmäßig zwischen den hinterlegten Schubstellungen x1 und x2 befinden. Durch eine erfindungsgemäße Ausgestaltung der Kransteuerung 1 ist es nun möglich, für die weitere Schubstellung x3 zwischen den hinterlegten Schubstellungen x1, x2 des Kranschubarms 6 einen betragsmäßig zwischen den hinterlegten Grenzwerten g1, g2 liegenden Grenzwert g3 zu ermitteln und diesen zur Vorgabe eines Grenzwerts für einen Betriebsparameter des Krans 2 durch die Überlastüberwachung 9 heranzuziehen. Der weitere Grenzwert g3 zu weiteren Schubstellung x3 kann dabei von der Recheneinheit 18 der Kransteuerung 1 durch eine Interpolation zwischen den im Speicher 8 hinterlegten Einträgen ermittelt werden. Die Vorgabe eines weiteren Grenzwerts kann dabei kontinuierlich für jede Schubstellung entlang des gesamten Schubwegs des Kranschubarms 6 der Kranarmverlängerung 5 oder auch nur abschnittsweise bzw. intervallartig gestuft erfolgen. So kann im Gegensatz zu einer lediglich den Einfahrzustand einer Kranarmverlängerung berücksichtigenden Kransteuerung, bei welcher sich lediglich zwei Grenzwerte über den Schubweg ergeben, ein an die momentane Schubstellung optimal angepasster Grenzwert für zumindest einen Betriebsparameter des Krans 2 aus im Speicher 8 hinterlegten Tabellen mit Einträgen ermitteln und durch die Kransteuerung 1 vorgeben lassen.

Analog dazu ist in Figur 9b ein Kran 2 mit einer Kranarmverlängerung 5 und einem Vorsatzarm 7 gezeigt, wobei sich die Kranarmverlängerung 5 dabei in einer durch den vom Knickwinkelsensor k1 erfassten Knickwinkel a23 charakterisierten Stellung befindet. Der der Kransteuerung 1 zugeführte Messwert zum Knickwinkel a23 liegt in diesem Ausführungsbeispiel betragsmäßig zwischen den im Speicher 8 der Kransteuerung 1 hinterlegten Knickwinkelstellungen a21 und a22. Durch eine erfindungsgemäße Ausgestaltung der Kransteuerung 1 kann ein weiterer Grenzwert g6, der betragsmäßig zwischen den hinterlegten Grenzwerten g4 und g5 liegt, vorgegeben werden. Es ist dabei beispielsweise möglich, dass der weitere Grenzwert g6 von der Recheneinheit 18 der Kransteuerung 1 durch eine Interpolation zwischen den im Speicher 8 hinterlegten Einträgen ermittelt wird. So ist es möglich, dass auch für Knickwinkelstellungen der Kranarmverlängerung 5 Grenzwerte für Betriebsparameter von der Überlastüberwachung 9 der Kransteuerung 1 vorgegeben werden können, für die im Speicher 8 keine eigenen Einträge hinterlegt sind.

Prinzipiell ist es auch denkbar, dass von der Kransteuerung 1 analog zum zuvor für die Kranarmverlängerung 5 Ausgeführten zusätzliche Grenzwerte für unterschiedliche - und auch nicht mit Einträgen im Speicher 8 charakterisierte - Schubstellungen und Knickwinkelstellungen des Vorsatzarms 7 und/oder des weiteren Vorsatzarms 12 für eine Ausführung eines Krans, wie er beispielsweise in Figur 4a oder Figur 4c gezeigt ist, von dieser ermittelt und vorgegeben werden können.

### Bezugszeichenliste:

- 1: Kransteuerung
- 2: Kran
- 3: erster Kranarm
- 4: zweiter Kranarm
- a1, a2, a3, a4: Knickwinkel
- 5: Kranarmverlängerung
- 6: Kranschubarm
- 7: Vorsatzarm
- s1: Schubstellungssensor
- x1, x2, x3: Schubstellungen
- 8: Speicher
- e1, e2: Einträge
- 9: Überlastüberwachung
- g1, g2, g3: Grenzwerte
- k1: Knickwinkelsensor
- a21, a22, a23: Knickwinkel
- e3, e4: Einträge
- g4, g5, g6: Grenzwerte
- 10, 11: Kranarm
- s2: Schubstellungssensor
- 12: Vorsatzarm
- k2: Knickwinkelsensor
- 13, 14: Kranarm
- 15, 16, 17: Hydraulikzylinder
- s3: Schubstellungssensor
- k3: Knickwinkelsensor
- 18: Recheneinheit
- 19: Fahrzeug
- 20: Hydraulikzylinder
- p: Drucksensor

## Patentansprüche

1. Kran (2), insbesondere Ladekran für ein Fahrzeug (19), mit einer Kransteuerung (1) für den Kran (2), wobei der Kran (2) zumindest folgendes aufweist:
- einen ersten Kranarm (3),
- einen unter einem ersten Knickwinkel (a1) an diesem anordenbaren zweiten Kranarm (4),
eine am zweiten Kranarm (4) unter einem zweiten Knickwinkel (a2) anordenbare Kranarmverlängerung (5) mit zumindest einem Kranschubarm (6), wobei der Kranschubarm (6) unterschiedliche Schubstellungen (x1, x2, x3) einnehmen kann,
und wobei die Kransteuerung (1) zumindest folgendes aufweist:
- einen Schubstellungssensor (s1) zur Erfassung der Schubstellung (x1, x2, x3) des zumindest einen Kranschubarms (6) und
- einen Speicher (8) zum Ablegen von Einträgen (e1, e2) für Grenzwerte (g4, g5) für zumindest einen für die momentane Kranauslastung charakteristischen Betriebsparameter des Krans (2), wobei für zumindest zwei Schubstellungen (x1, x2) des zumindest einen Kranschubarms (6), vorzugsweise für eine im Wesentlichen vollständig eingefahrene Schubstellung (x1) des Kranschubarms (6) und eine im Wesentlichen vollständig ausgefahrene Schubstellung (x2) des Kranschubarms (6), Einträge (e1, e2) für maximal zulässige Grenzwerte (g1, g2) im Speicher (8) hinterlegt sind,
und die Kransteuerung (1) weiter eine Überlastüberwachung (9) aufweist und durch die Überlastüberwachung (9) der Kransteuerung (1) ein Grenzwert (g1, g2) für zumindest einen Betriebsparameter des Krans (2) vorgebbar ist, wobei durch die Überlastüberwachung (9) der Grenzwert (g1, g2) ausgehend von den hinterlegten Einträgen (e1, e2) in Abhängigkeit von der Schubstellung (x1, x2) des Kranschubarms (6) vorgegeben wird,
**dadurch gekennzeichnet, dass** für zumindest eine weitere Schubstellung (x3) zwischen den hinterlegten Schubstellungen (x1, x2) des zumindest einen Kranschubarms (6) ein betragsmäßig zwischen den hinterlegten Einträgen (e1, e2) liegender Grenzwert (g3) vorgebbar ist.

2. Kran (2) nach Anspruch 1, wobei die Kransteuerung (1) einen Knickwinkelsensor (k1) zur Erfassung des zweiten Knickwinkels (a2) der Kranarmverlängerung (5) in einer vertikalen Ebene aufweist, im Speicher (8) für zumindest zwei Knickwinkel (a21, a22) der Kranarmverlängerung (5) Einträge (e2, e4) für maximal zulässige Grenzwerte (g4, g5) hinterlegt sind und die Vorgabe des Grenzwerts (g4, g5) durch die Überlastüberwachung (9) abhängig von dem erfassten Knickwinkel (a2) erfolgt, wobei vorzugsweise für zumindest einen weiteren Knickwinkel (a23) zwischen den hinterlegten Knickwinkeln (a21, a22) der Kranarmverlängerung (5) ein betragsmäßig zwischen den hinterlegten Einträgen (e3, e4) liegender Grenzwert (g6) vorgebbar ist.

3. Kran (2) nach einem der Ansprüche 1 oder 2, wobei der Kran (2) weiter einen an der Kranarmverlängerung (5) unter einem dritten Knickwinkel (a3) anordenbaren Vorsatzarm (7), vorzugsweise ein Knickarm, aufweist und der Vorsatzarm (7) zumindest zwei Kranarme (10, 11) aufweist, wobei die zwei Kranarme (10, 11) unterschiedliche Schubstellungen zueinander einnehmen können, und wobei die Kransteuerung (1) einen weiteren Schubstellungssensor (s2) zur Erfassung der Schubstellung der Kranarme (10, 11) des Vorsatzarms (7) aufweist, und wobei im Speicher (8) für zumindest zwei Schubstellungen der Kranarme (10, 11) des Vorsatzarms (7), vorzugsweise für eine im Wesentlichen vollständig eingefahrene Schubstellung der Kranarme (10, 11) des Vorsatzarms (7) und eine im Wesentlichen vollständig ausgefahrene Schubstellung der Kranarme (10, 11) des Vorsatzarms (7), Einträge für maximal zulässige Grenzwerte hinterlegt sind und die Vorgabe des Grenzwerts durch die Überlastüberwachung (9) abhängig von der erfassten Schubstellung der Kranarme (10, 11) des Vorsatzarms (7) erfolgt, wobei vorzugsweise für zumindest eine weitere Schubstellung zwischen den hinterlegten Schubstellungen der Kranarme (10, 11) des Vorsatzarms (7) ein betragsmäßig zwischen den hinterlegten Einträgen liegender Grenzwert vorgebbar ist.

4. Kran (2) nach Anspruch 3, wobei die Kransteuerung (1) einen weiteren Knickwinkelsensor (k2) zur Erfassung des dritten Knickwinkels (a3) des Vorsatzarms (7) in einer vertikalen Ebene aufweist, im Speicher (8) für zumindest zwei Knickwinkel des Vorsatzarms (7) Einträge für maximal zulässige Grenzwerte hinterlegt sind und die Vorgabe des Grenzwerts durch die Überlastüberwachung (9) abhängig von dem erfassten Knickwinkel (a3) des Vorsatzarms (7) erfolgt.

5. Kran (2) nach Anspruch 4, wobei für zumindest einen weiteren Knickwinkel des Vorsatzarms (7) zwischen den hinterlegten Knickwinkeln des Vorsatzarms (7) ein betragsmäßig zwischen den hinterlegten Einträgen liegender Grenzwert vorgebbar ist.

6. Kran (2) nach einem der Ansprüche 1 bis 5, wobei der Kran (2) weiter einen an der Kranarmverlängerung (5) unter einem dritten Knickwinkel (a3) anordenbaren Vorsatzarm (7), vorzugsweise ein Knickarm, aufweist und an dem Vorsatzarm (7) unter einem vierten Knickwinkel (a4) ein weiterer Vorsatzarm (12), vorzugsweise ein weiterer Knickarm, anordenbar ist, und der weitere Vorsatzarm (12) zumindest zwei Kranarme (13, 14) aufweist, wobei die zwei Kranarme (13, 14) unterschiedliche Schubstellungen zueinander einnehmen können, und wobei die Kransteuerung einen weiteren Schubstellungssensor (s3) zur Erfassung der Schubstellung der Kranarme (13, 14) des weiteren Vorsatzarms (12) aufweist, und wobei im Speicher (8) für zumindest zwei Schubstellungen der Kranarme (13, 14) des weiteren Vorsatzarms (12), vorzugsweise für eine im Wesentlichen vollständig eingefahrene Schubstellung der Kranarme (13, 14) des weiteren Vorsatzarms (12) und eine im Wesentlichen vollständig ausgefahrene Schubstellung der Kranarme (13, 14) des weiteren Vorsatzarms (12), Einträge für maximal zulässige Grenzwerte hinterlegt sind und die Vorgabe des Grenzwerts durch die Überlastüberwachung (9) abhängig von der erfassten Schubstellung der Kranarme (13, 14) des weiteren Vorsatzarms (12) erfolgt.

7. Kran (2) nach Anspruch 6, wobei für zumindest eine weitere Schubstellung zwischen den hinterlegten Schubstellungen der Kranarme (13, 14) des Vorsatzarms (12) ein betragsmäßig zwischen den hinterlegten Einträgen liegender Grenzwert vorgebbar ist.

8. Kran (2) nach einem der Ansprüche 6 oder 7, wobei die Kransteuerung (1) einen weiteren Knickwinkelsensor (k3) zur Erfassung des vierten Knickwinkels (a4) des weiteren Vorsatzarms (12) in einer vertikalen Ebene aufweist, im Speicher (8) für zumindest zwei Knickwinkel des weiteren Vorsatzarms (12) Einträge für maximal zulässige Grenzwerte hinterlegt sind und die Vorgabe des Grenzwerts durch die Überlastüberwachung (9) abhängig von dem erfassten Knickwinkel (a4) des weiteren Vorsatzarms (12) erfolgt, wobei vorzugsweise für zumindest einen weiteren Knickwinkel des weiteren Vorsatzarms (12) zwischen den hinterlegten Knickwinkeln des weiteren Vorsatzarms (12) ein betragsmäßig zwischen den hinterlegten Einträgen liegender Grenzwert vorgebbar ist.

9. Kran (2) nach Anspruch 1, wobei der Kran (2) weiter einen an der Kranarmverlängerung (5) unter einem dritten Knickwinkel (a3) anordenbaren Vorsatzarm (7), vorzugsweise ein Knickarm, aufweist und für unterschiedliche Ausführungen von Vorsatzarmen (7) jeweils spezifische Einträge mit Grenzwerten im Speicher (8) hinterlegt sind.

10. Kran (2) nach einem der Ansprüche 1 bis 5, wobei der Kran (2) weiter einen an der Kranarmverlängerung (5) unter einem dritten Knickwinkel (a3) anordenbaren Vorsatzarm (7), vorzugsweise ein Knickarm, aufweist und an dem Vorsatzarm (7) unter einem vierten Knickwinkel (a4) ein weiterer Vorsatzarm (12), vorzugsweise ein weiterer Knickarm, anordenbar ist, und für unterschiedliche Ausführungen von Vorsatzarmen (7, 12) jeweils spezifische Einträge mit Grenzwerten im Speicher (8) hinterlegt sind

11. Kran (2) nach wenigstens einem der vorangehenden Ansprüche, wobei die Schubstellung des Kranschubarms (6) und/oder der Kranarme (10, 11, 13, 14) durch eine Wegmesseinrichtung erfasst wird.

12. Kran (2) nach wenigstens einem der vorangehenden Ansprüche, wobei der Betriebsparameter der Druck im Hydraulikzylinder (15, 16, 17, 20) ist.

13. Kran (2) nach wenigstens einem der vorangehenden Ansprüche, wobei der Grenzwert für die zumindest eine weitere Schubstellung oder den zumindest einen weiteren Knickwinkel durch Interpolation, vorzugsweise durch eine lineare Interpolation oder eine polynomiale Interpolation höherer Ordnung, zwischen den im Speicher (8) hinterlegten Einträgen ermittelbar ist.

14. Kran (2) nach wenigstens einem der vorangehenden Ansprüche, wobei durch die Überlastüberwachung (9) zumindest eine Steuerfunktion der Kransteuerung (1) abhängig vom Verhältnis des erfassten Betriebsparameters zum Grenzwert für den Betriebsparameter einschränkbar ist.

15. Kran (2) nach wenigstens einem der vorangehenden Ansprüche, wobei der Kran (2) ein Ladekran für ein Fahrzeug (19), besonders bevorzugt ein Knickarmkran, ist.

## Claims

1. A crane (2), in particular a loading crane for a vehicle (19), with a crane controller (1) for the crane (2), wherein the crane (2) has at least the following:
- a first crane arm (3),
- a second crane arm (4) that can be arranged thereon at a first articulation angle (a1),
a crane arm extension (5) that can be arranged on the second crane arm (4) at a second articulation angle (a2) with at least one crane extension arm (6), wherein the crane extension arm (6) can assume different extension positions (x1, x2, x3),
and wherein the crane controller (1) has at least the following:
- an extension position sensor (s1) for detecting the extension position (x1, x2, x3) of the at least one crane extension arm (6) and
- a memory (8) for storing entries (e1, e2) for limit values (g4, g5) for at least one operating parameter of the crane (2) characteristic of the current capacity utilisation of the crane, wherein entries (e1, e2) for maximum permissible limit values (g1, g2) are stored in the memory (8) for at least two extension positions (x1, x2) of the at least one crane extension arm (6), preferably for a substantially completely retracted extension position (x1) of the crane extension arm (6) and a substantially completely extended extension position (x2) of the crane extension arm (6),
and the crane controller (1) further has an overload monitoring means (9) and a limit value (g1, g2) for at least one operating parameter of the crane (2) is specifiable by the overload monitoring means (9) of the crane controller (1), wherein the limit value (g1, g2) is specified by the overload monitoring means (9) on the basis of the stored entries (e1, e2) as a function of the extension position (x1, x2) of the crane extension arm (6),
**characterized in that** a limit value (g3) lying between the stored entries (e1, e2) with respect to magnitude is specifiable for at least one further extension position (x3) between the stored extension positions (x1, x2) of the at least one crane extension arm (6).

2. Crane (2) according to claim 1 , wherein the crane controller (1) has an articulation angle sensor (k1) for detecting the second articulation angle (a2) of the crane arm extension (5) in a vertical plane, entries (e2, e4) for maximum permissible limit values (g4, g5) are stored in the memory (8) for at least two articulation angles (a21, a22) of the crane arm extension (5) and the specification of the limit value (g4, g5) is effected by the overload monitoring means (9) as a function of the detected articulation angle (a2), wherein preferably a limit value (g6) lying between the stored entries (e3, e4) with respect to magnitude is specifiable for at least one further articulation angle (a23) between the stored articulation angles (a21, a22) of the crane arm extension (5).

3. Crane (2) according to one of the claims 1 or 2, wherein the crane (2) further has an attachment arm (7), preferably an articulated arm, that can be arranged on the crane arm extension (5) at a third articulation angle (a3) and. the attachment arm (7) has at least two crane arms (10, 11), wherein the two crane arms (10, 11) can assume different extension positions relative to each other, and wherein the crane controller (1) has a further extension position sensor (s2) for detecting the extension position of the crane arms (10, 11) of the attachment arm (7), and wherein entries for maximum permissible limit values are stored in the memory (8) for at least two extension positions of the crane arms (10, 11) of the attachment arm (7), preferably for a substantially completely retracted extension position of the crane arms (10, 11) of the attachment arm (7) and a substantially completely extended extension position of the crane arms (10, 11) of the attachment arm (7), and the specification of the limit value is effected by the overload monitoring means (9) as a function of the detected extension position of the crane arms (10, 11) of the attachment arm (7), wherein preferably a limit value lying between the stored entries with respect to magnitude is specifiable for at least one further extension position between the stored extension positions of the crane arms (10, 11) of the attachment arm (7).

4. Crane (2) according to claim 3 , wherein the crane controller (1) has a further articulation angle sensor (k2) for detecting the third articulation angle (a3) of the attachment arm (7) in a vertical plane, entries for maximum permissible limit values are stored in the memory (8) for at least two articulation angles of the attachment arm (7) and the specification of the limit value is effected by the overload monitoring means (9) as a function of the detected articulation angle (a3) of the attachment arm (7).

5. Crane (2) according to claim 4, wherein a limit value lying between the stored entries with respect to magnitude is specifiable for at least one further articulation angle of the attachment arm (7) between the stored articulation angles of the attachment arm (7).

6. Crane (2) according to one of the claims 1 to 5, wherein the crane (2) further has an attachment arm (7), preferably an articulated arm, that can be arranged on the crane arm extension (5) at a third articulation angle (a3) and a further attachment arm (12), preferably a further articulated arm, can be arranged on the attachment arm (7) at a fourth articulation angle (a4) and the further attachment arm (12) has at least two crane arms (13, 14), wherein the two crane arms (13, 14) can assume different extension positions relative to each other, and wherein the crane controller has a further extension position sensor (s3) for detecting the extension position of the crane arms (13, 14) of the further attachment arm (12), and wherein entries for maximum permissible limit values are stored in the memory (8) for at least two extension positions of the crane arms (13, 14) of the further attachment arm (12), preferably for a substantially completely retracted extension position of the crane arms (13, 14) of the further attachment arm (12) and a substantially completely extended extension position of the crane arms (13, 14) of the further attachment arm (12), and the specification of the limit value is effected by the overload monitoring means (9) as a function of the detected extension position of the crane arms (13, 14) of the further attachment arm (12).

7. Crane (2) according to claim 6, wherein a limit value lying between the stored entries with respect to magnitude is specifiable for at least one further extension position between the stored extension positions of the crane arms (13, 14) of the attachment arm (12).

8. Crane (2) according to one of claims 6 or 7, wherein the crane controller (1) has a further articulation angle sensor (k3) for detecting the fourth articulation angle (a4) of the further attachment arm (12) in a vertical plane, entries for maximum permissible limit values are stored in the memory (8) for at least two articulation angles of the further attachment arm (12) and the specification of the limit value is effected by the overload monitoring means (9) as a function of the detected articulation angle (a4) of the further attachment arm (12), wherein preferably a limit value lying between the stored entries with respect to magnitude is specifiable for at least one further articulation angle of the further attachment arm (12) between the stored articulation angles of the further attachment arm (12).

9. Crane (2) according to claim 1, wherein the crane (2) further has an attachment arm (7), preferably an articulated arm, that can be arranged on the crane arm extension (5) at a third articulation angle (a3), and for different embodiments of attachment arms (7) in each case specific entries with limit values are stored in the memory (8).

10. Crane (2) according to one of the claims 1 to 5, wherein the crane (2) further has an attachment arm (7), preferably an articulated arm, that can be arranged on the crane arm extension (5) at a third articulation angle (a3), and a further attachment arm (12), preferably a further articulated arm, can be arranged on the attachment arm (7) at a fourth articulation angle (a4), and for different embodiments of attachment arms (7, 12) in each case specific entries with limit values are stored in the memory (8).

11. Crane (2) according to at least one of the preceding claims, wherein the extension position of the crane extension arm (6) and/or the crane arms (10, 11, 13, 14) is detected by a distance measurement device.

12. Crane (2) according to at least one of the preceding claims, wherein the operating parameter is the pressure in the hydraulic cylinder (15, 16, 17, 20).

13. Crane (2) according to at least one of the preceding claims, wherein the limit value for the at least one further extension position or the at least one further articulation angle can be determined by interpolation, preferably by a linear interpolation or a higher-order polynomial interpolation, between the entries stored in the memory (8).

14. Crane (2) according to at least one of the preceding claims, wherein at least one control function of the crane controller (1) can be restricted by the overload monitoring means (9) as a function of the ratio of the detected operating parameter to the limit value for the operating parameter.

15. Crane (2) according to at least one of the preceding claims, wherein the crane (2) is a loading crane for a vehicle (19), particularly preferably an articulated arm crane.

## Revendications

1. Grue (2), en particulier grue de chargement pour un véhicule (19), dotée d'une commande de grue (1) pour la grue (2), dans laquelle la grue (2) comporte au moins ce qui suit :
- une première flèche (3),
- une deuxième flèche (4) disposable sur celle-ci avec un premier angle d'articulation (a1),
- un prolongement de flèche (5) disposable sur la deuxième flèche (4) avec un deuxième angle d'articulation (a2), doté d'au moins un bras de poussée (6), dans laquelle le bras de poussée (6) peut occuper différentes positions de poussée (x1, x2, x3),
et dans laquelle la commande de grue (1) comporte au moins ce qui suit :
- un capteur de position de poussée (s1) destiné à saisir la position de poussée (x1, x2, x3) de l'au moins un bras de poussée (6) et
- une mémoire (8) destinée à conserver des entrées (e1, e2) de valeurs limites (g4, g5) pour au moins un paramètre opérationnel de la grue (2) caractéristique de la charge actuelle de la grue, dans laquelle pour au moins deux positions de poussée (x1, x2) de l'au moins un bras de poussée (6), de préférence pour une position de poussée (x1) sensiblement entièrement rentrée du bras de poussée (6) et une position de poussée (x2) sensiblement entièrement sortie du bras de poussée (6), des entrées (e1, e2) pour des valeurs limites maximales autorisées (g1, g2) sont enregistrées dans la mémoire (8),
et la commande de grue (1) comporte en outre une surveillance de surcharge (9) et une valeur limite (g1, g2) pour au moins un paramètre opérationnel de la grue (2) peut être prédéfini par la surveillance de surcharge (9) de la commande de grue (1), dans laquelle la valeur limite (g1, g2) est prédéfinie par la surveillance de surcharge (9) à partir des entrées (e1, e2) enregistrées en fonction de la position de poussée (x1, x2) du bras de poussée (6),
**caractérisée en ce qu'**une valeur limite (g3) située quantitativement entre les entrées (e1, e2) enregistrées peut être prédéfinie pour au moins une position de poussée ultérieure (x3) entre les positions de poussée (x1, x2) enregistrées de l'au moins un bras de poussée (6).

2. Grue (2) selon la revendication 1, dans laquelle la commande de grue (1) comporte un capteur d'angle d'articulation (k1) destiné à saisir le deuxième angle d'articulation (a2) du prolongement de flèche (5) dans un plan vertical, des entrées (e2, e4) pour des valeurs limites (g4, g5) maximales autorisées sont enregistrées dans la mémoire (8) pour au moins deux angles d'articulation (a21, a22) du prolongement de flèche (5) et la prédéfinition de la valeur limite (g4, g5) est effectuée par la surveillance de surcharge (9) en fonction de l'angle d'articulation (a2) saisi, de préférence dans laquelle une valeur limite (g6) située quantitativement entre les entrées (e3, e4) enregistrées peut être prédéfinie pour au moins un angle d'articulation ultérieur (a23) entre les angles d'articulation (a21, a22) enregistrés du prolongement de flèche (5).

3. Grue (2) selon l'une des revendications 1 ou 2, dans laquelle la grue (2) comporte en outre un bras adaptateur (7), de préférence un bras articulé, pouvant être disposé sur le prolongement de flèche (5) avec un troisième angle d'articulation (a3), et le bras adaptateur (7) comporte au moins deux flèches (10, 11), dans laquelle les deux flèches (10, 11) peuvent occuper des positions de poussée différentes l'une de l'autre, et dans laquelle la commande de grue (1) comporte un capteur de position de poussée ultérieur (s2) destiné à saisir la position de poussée des flèches (10, 11) du bras adaptateur (7), et dans laquelle pour au moins deux positions de poussée des flèches (10, 11) du bras adaptateur (7), de préférence pour une position de poussée sensiblement entièrement rentrée des flèches (10, 11) du bras adaptateur (7) et une position de poussée sensiblement entièrement sortie des flèches (10, 11) du bras adaptateur (7) des entrées pour des valeurs limites maximales autorisées sont enregistrées dans la mémoire (8) et la prédéfinition de la valeur limite est effectuée par la surveillance de surcharge (9) en fonction de la position de poussée des flèches (10, 11) du bras adaptateur (7) saisie, de préférence dans laquelle une valeur limite située quantitativement entre les entrées enregistrées peut être prédéfinie pour au moins une position de poussée ultérieure entre les positions de poussée enregistrées des flèches (10, 11) du bras adaptateur (7).

4. Grue (2) selon la revendication 3, dans laquelle la commande de grue (1) comporte un capteur d'angle d'articulation ultérieur (k2) destiné à saisir le troisième angle d'articulation (a3) du bras adaptateur (7) dans un plan vertical, des entrées pour des valeurs limites maximales autorisées sont enregistrées dans la mémoire (8) pour au moins deux angles d'articulation du bras adaptateur (7) et la prédéfinition de la valeur limite est effectuée par la surveillance de surcharge (9) en fonction de l'angle d'articulation (a3) du bras adaptateur (7) saisi.

5. Grue (2) selon la revendication 4, dans laquelle une valeur limite située quantitativement entre les entrées enregistrées peut être prédéfinie pour au moins un angle d'articulation ultérieur du bras adaptateur (7) entre les angles d'articulation enregistrés du bras adaptateur (7).

6. Grue (2) selon l'une des revendications 1 à 5, dans laquelle la grue (2) comporte en outre un bras adaptateur (7), de préférence un bras articulé, pouvant être disposé sur le prolongement de flèche (5) avec un troisième angle d'articulation (a3) et un bras adaptateur ultérieur (12), de préférence un bras articulé ultérieur, pouvant être disposé sur le bras adaptateur (7) avec un quatrième angle d'articulation (a4) et le bras adaptateur ultérieur (12) comporte au moins deux flèches (13, 14), dans laquelle les deux flèches (13, 14) peuvent occuper des positions de poussée différentes l'une de l'autre, et dans laquelle la commande de grue comporte un capteur de position de poussée ultérieur (s3) destiné à saisir la position de poussée des flèches (13, 14) du bras adaptateur ultérieur (12), et dans laquelle pour au moins deux positions de poussée des flèches (13, 14) du bras adaptateur ultérieur (12), de préférence pour une position de poussée sensiblement entièrement rentrée des flèches (13, 14) du bras adaptateur ultérieur (12) et une position de poussée sensiblement entièrement sortie des flèches (13, 14) du bras adaptateur ultérieur (12), des entrées pour des valeurs limites maximales autorisées sont enregistrées dans la mémoire (8) et la prédéfinition de la valeur limite est effectuée par la surveillance de surcharge (9) en fonction de la position de poussée des flèches (13, 14) du bras adaptateur ultérieur (12) saisie.

7. Grue (2) selon la revendication 6, dans laquelle une valeur limite située quantitativement entre les entrées enregistrées peut être prédéfinie pour au moins une position de poussée ultérieure entre les positions de poussée enregistrées des flèches (13, 14) du bras adaptateur ultérieur (12).

8. Grue (2) selon l'une des revendications 6 ou 7, dans laquelle la commande de grue (1) comporte un capteur d'angle d'articulation ultérieur (k3) destiné à saisir le quatrième angle d'articulation (a4) du bras adaptateur ultérieur (12) dans un plan vertical, des entrées pour des valeurs limites maximales autorisées sont enregistrées dans la mémoire (8) pour au moins deux angles d'articulation du bras adaptateur ultérieur (12) et la prédéfinition de la valeur limite est effectuée par la surveillance de surcharge (9) en fonction de l'angle d'articulation (a4) du bras adaptateur ultérieur (12) saisi, de préférence dans laquelle une valeur limite située quantitativement entre les entrées enregistrées peut être prédéfinie pour au moins un angle d'articulation ultérieur du bras adaptateur ultérieur (12) entre les angles d'articulation enregistrés du bras adaptateur ultérieur (12).

9. Grue (2) selon la revendication 1, dans laquelle la grue (2) comporte en outre un bras adaptateur (7), de préférence un bras articulé, pouvant être disposé sur le prolongement de flèche (5) avec un troisième angle d'articulation (a3), et des entrées respectives spécifiques avec des valeurs limites sont enregistrées dans la mémoire (8) pour différentes versions de bras adaptateur (7).

10. Grue (2) selon l'une des revendications 1 à 5, dans laquelle la grue (2) comporte en outre un bras adaptateur (7), de préférence un bras articulé, pouvant être disposé sur le prolongement de flèche (5) avec un troisième angle d'articulation (a3) et un bras adaptateur ultérieur (12), de préférence un bras articulé ultérieur, pouvant être disposé sur le bras adaptateur (7) avec un quatrième angle d'articulation (a4) et des entrées respectives spécifiques avec des valeurs limites sont enregistrées dans la mémoire (8) pour différentes versions de bras adaptateurs (7, 12).

11. Grue (2) selon au moins une des revendications précédentes, dans laquelle la position de poussée du bras de poussée (6) et/ou des flèches (10, 11, 13, 14) est saisie par un dispositif de mesure de course.

12. Grue (2) selon au moins une des revendications précédentes, dans laquelle le paramètre opérationnel est la pression dans le cylindre hydraulique (15, 16, 17, 20).

13. Grue (2) selon au moins une des revendications précédentes, dans laquelle la valeur limite pour l'au moins une position de poussée ultérieure ou l'au moins un angle d'articulation ultérieur peut être déterminée par interpolation entre les entrées enregistrées dans la mémoire (8), de préférence par une interpolation linéaire ou par une interpolation polynomiale d'ordre supérieur.

14. Grue (2) selon au moins une des revendications précédentes, dans laquelle au moins une fonction de commande de la commande de grue (1) peut être limitée par la surveillance de surcharge (9) en fonction du rapport entre le paramètre opérationnel saisi et la valeur limite pour le paramètre opérationnel.

15. Grue (2) selon au moins une des revendications précédentes, dans laquelle la grue (2) est une grue de chargement pour un véhicule (19), tout particulièrement une grue à bras articulé.
